(19) Europäisches Patentamt
European Patent Office
Office européen des brevets

(11) Veröffentlichungsnummer: **0 280 178 B1**

(12) # EUROPÄISCHE PATENTSCHRIFT

(45) Veröffentlichungstag der Patentschrift: **03.06.92**

(51) Int. Cl.$^5$: **C08L 67/02**, C08L 23/16, C08L 51/04, C08L 85/02, C08K 5/52, C08K 5/13, C08K 5/36, C08K 5/12

(21) Anmeldenummer: **88102316.2**

(22) Anmeldetag: **18.02.88**

(54) **Stabilisierte Mischungen aus thermoplastischem Polyester und kautschukelastischem Polymerisat, Verfahren zur Herstellung dieser Mischungen und ihre Verwendung zur Herstellung von Formkörpern.**

(30) Priorität: **25.02.87 DE 3706045**

(43) Veröffentlichungstag der Anmeldung:
**31.08.88 Patentblatt 88/35**

(45) Bekanntmachung des Hinweises auf die Patenterteilung:
**03.06.92 Patentblatt 92/23**

(84) Benannte Vertragsstaaten:
**DE FR GB IT**

(56) Entgegenhaltungen:
**EP-A- 0 048 878** **EP-A- 0 251 712**
**DE-A- 1 912 179** **DE-A- 2 358 293**
**FR-A- 2 112 401** **US-A- 3 053 878**
**US-A- 4 233 208**

(73) Patentinhaber: **BAYER AG**
**W-5090 Leverkusen 1 Bayerwerk(DE)**

(72) Erfinder: **Buysch, Hans-Josef, Dr.**
**Brandenburger Strasse 28**
**W-4150 Krefeld(DE)**
Erfinder: **Köhler, Karl-Heinz, Dr.**
**Buschstrasse 165**
**W-4150 Krefeld(DE)**
Erfinder: **Rempel, Dieter, Dr.**
**Max-Beckmann-Strasse 35**
**W-5090 Leverkusen 1(DE)**
Erfinder: **Lindner, Christian, Dr.**
**Riehler Strasse 200**
**W-5000 Köln 60(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft Mischungen aus Polyalkylenterephthalat und kautschukelastischem Polymerisat, die gegen thermischent Abbau durch monomeres und/oder oligomeres Umsetzungsprodukt aus Perhydrobisphenol-A, Pentaerythrit und Phosphorigsäureester stabilisiert sind. Die Erfindung betrifft auch ein Verfahren zur Herstellung dieser Mischungen durch Zusammenschmelzen der Komponenten sowie ihre Verwendung zur Herstellung von Formkörpern, insbesondere von Spritzguß-Formkörpern.

Mischungen aus Polyalkylenterephthalat und kautschukelastischem Polymerisat sind bekannt; vgl. beispielsweise
US-PS 3 706 699, DE-OS 1 694 200 = US-PS 3 591 659, US-PS 4 086 296, DE-OS 2 248 242 = US-PS 4 013 613 + 4 097 446, DE-PS 2 343 609 = US-PS 3 864 428, DE-OS 2 364 318 = US-PS 4 080 354, DE-PS 2 348 377 = US-PS 3 919 353, DE-PS 2 444 584 = US-PS 4 022 748, US-PS 4 111 892 und 4 257 929, DE-OS 2 726 256 = US-PS 4 096 202.

Diese Mischungen werden während ihrer Herstellung und Verarbeitung thermisch belastet, und zwar in der Regel mindestens je einmal beim Zusammenschmelzen der Komponenten (erfolgt üblicherweise durch Extrusion) und bei der Verarbeitung zu Formkörpern (meistens durch Spritzguß). Die thermische Belastung führt zu einem Molekulargewichtsabbau u.a. auch deshalb, weil die Komponenten mindestens teilweise noch von ihrer Herstellung herrührend Additive wie z.B. Katalysatoren, Eumulgatoren, Peroxidreste usw., enthalten, die bei thermischer Belastung der Produkte Abbaureaktionen beschleunigen.

Es ist bekannt, thermoplastische Polyester mit Phosphorverbindungen, wie z.B. Phosphorigsäureestern, zu stabilisieren (DE-OS 2 352 037, 2 615 341, 3 036 391). Auch die Verwendung sterisch gehinderter Phenole für die Stabilisierung von Polyestern und Vinylpolymerisaten wird beschrieben (Ullmanns Encyclopädie der technischen Chemie, 4. Aufl., Bd. 8, 25-32, 39-41, Verlag Chemie, Weinheim 1974).

Ferner beschreibt US-P 3,053,878 Reaktionsprodukte aus Perhydrobisphenol-A, Pentaerytrit und Estern der Phosphorigsäure, die als Stabilisatoren für Polyethylenterephthalat und auch für Elastomere benutzt werden können.

DE-A 1,912,179 beschreibt die Kombination von solchen Reaktionsprodukten mit phenolischen Antioxydantien, um Polyurethane zu stabilisieren.

Es hat sich nun herausgestellt, daß Verbindungen, die thermoplastische Polyester hervorragend zu stabilisieren vermögen (z.B. solche gemäß DE-OS 2 615 341), bei Mischungen aus thermoplastischem Polyester und kautschukelastischem Polymerisat nur mäßige Ergebnisse bewirken. Da unerwünschte Abbaureaktionen regelmäßig auch zu einer Verschlechterung mechanischer Eigenschaften führen, war es Aufgabe der Erfindung, besser stabilisierte Mischungen aus thermoplastischem Polyester und kautschukelastischem Polymerisat bereitzustellen.

Überraschenderweise wurde nun gefunden, daß monomere und/oder oligomere Umsetzungsprodukte aus Perhydrobisphenol-A, Pentaerythrit, umesterungsfähigem Phosphorigsäureester und gegebenenfalls einwertigem Alkohol diese Aufgabe lösen.

Gegenstand der Erfindung sind also Mischungen aus

65 bis 99, vorzugsweise 75 bis 90 Gew.-% Polyalkylenterephthalat P, welches ein Reaktionsprodukt aus aromatischen Dicarbonsäuren oder ihren reaktionsfähigen Derivaten und aliphatischen, cycloaliphatischen oder araliphatischen Diolen und Mischungen dieser Reaktionsprodukte ist, und

35 bis 1, vorzugsweise 25 bis 10 Gew.-% kautschukelastischem Polymerisat Q mit einer Glasübergangstemperatur unter -30 °C, vorzugsweise unter -40 °C,

wobei sich die Prozentangaben auf die Summe P + Q beziehen,
dadurch gekennzeichnet, daS die Mischungen 0,01 bis 3, vorzugsweise 0,1 bis 2 Gew.-%, bezogen auf die Summe P + Q, monomeres und/oder oligomeres Umsetzungsprodukt aus
Perhydrobisphenol-A und -
jeweils pro Mol Perhydrobisphenol-A -
0,5 bis 2,0, vorzugweise 0,66 bis 1,5, besonders bevorzugt 0,75 bis 1,3, insbesondere 0,8 bis 1,2 Mol Pentaerythrit,
1,3 bis 4,0,vorzugsweise 1,5 bis 3,5, besonders bevorzugt 1,6 bis 3,2, insbesondere 1,7 bis 2,8 Mol Phosphorigsäure-$C_1$-$C_4$-alkyl- oder -phenylester und gegebenenfalls
bis 1,5, vorzugsweise bis 1, besonders bevorzugt bis 0,5, insbesondere bis 0,3 Mol aliphatischem einwertigem $C_6$-$C_{18}$-Alkohol, und
bezogen auf die Summe P + Q, 0,01 bis 3, vorzugsweise 0,1 bis 2,5, Gew.-% phenolisches Antioxydans und

bezogen auf die Summe P + 0, 0,1 bis 3 Gew.-% Thioether der Formel

$$(R^{10}-O-\overset{\overset{O}{\|}}{C}-CH_2-CH_2)_2S \qquad (IV)$$

worin

$R^{10}$ $C_8$-$C_{18}$-Alkyl, vorzugsweise $C_{12}$-$C_{18}$-Alkyl, insbesondere n-Dodecyl und n-Stearyl, bedeuten,

enthalten.

Polyalkylenterephthalate P im Sinne der Erfindung sind Reaktionsprodute aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate P lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunstoff-Handbuch, Bd. VIII, S. 695 ff, Carl-Hanser-Verlag, München 1973).

Bevorzugte Polyalkylenterephthalate P enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die bevorzugten Polyalkylenterephthalate P können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate P können neben Ethylenglykol- bzw. Butandiol-1,4-resten bis zu 20 Mol-%, vorzugweise bis zu 10 Mol-%, anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexandimethanol-1,4, 3-Ethylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-($\beta$-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-$\beta$-hydroxyethoxyphenyl)-propan und 2,2-Bis-(4-hydroxypropoxyphenyl)-propan (DE-OS 2 407 674, 2 407 776, 2 715 932).

Die Polyalkylenterephthalate P können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate P, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Mischungen enthalten 1 bis 50, vorzugsweise 1 bis 30 Gew.-% Polyethylenterephthalat und 50 bis 99, vorzugsweise 70 bis 99 Gew.-% Polybutylenterephthalat.

Die als Komponente P vorzugsweise verwendeten Polyalkylenterephthalate besitzen im allgemeinen eine Intrinsic-Viskosität von 0,4 bis 1,5 dl/g, vorzugsweise 0,6 bis 1,3 dl/g, insbesondere 1,0 bis 1,3 dl/g, jeweils gemessen in Phenol/o-Dichlorbenzol (1:1 Gewichtsteile) bei 25 °C im Ubbelohde-Viskosimeter.

Die Polymerisate Q mit einer Glasüberganstemperatur unter -30 °C umfassen Copolymerisate - insbesondere Pfropfcopolymerisate - mit kautschukelastischen Eigenschaften, die im wesentlichen aus mindestens 2 der folgenden Monomeren erhältlich sind: Chloropren, Butadien-1,3, Isopren, Styrol, Acrylnitril, Ethylen, Propylen, Vinylacetat und (Meth)-Acrylsäureester mit 1 bis 18 C-Atomen in der Alkoholkomponente: also Polymerisate, wie sie z.B. in "Methoden der Organischen Chemie" (Houben-Weyl), Bd. 14/1, Georg Thieme Verlag, Stuttgart 1961, S. 393-406 und in C.B. Bucknall, "Toughened Plastics", Appl. Science Publishers, London 1977, beschrieben sind. Bevorzugte Polymerisate Q sind mindestens partiell vernetzt und besitzen Gelgehalte von über 20, vorzugsweise über 40 Gew.-%, insbesondere über 60 Gew.-%.

Bevorzugte Polymerisate Q sind Ethylen/Vinylacetat-Copolymerisate mit 15 bis 60 Gew.-% Vinylacetatresten und Schmelzindices von nicht fließfähig bis 1000, vorzugsweise von 0,1 bis 20, gemessen bei 190 °C und 2,16 kg Belastung nach DIN 53 735.

Bevorzugte Polymerisate Q sind z.B. auch die sogenannten EPM- bzw. EPDM-Kautschuke, in denen

das Gewichtsverhältnis von Ethylen- zu Propylenresten im Bereich von 40:60 bis 65:35 liegt.

Die Mooney-Viskosität ($ML_{1-4}$/100 °C) der EPM- bzw. EPDM-Kautschuke können zwischen 25 bis 200, vorzugsweise zwischen 35 bis 120, liegen.

Die verwendeten Ethylen/Propylen-Copolymerisate (EPM) besitzen praktisch keine Doppelbindungen, während die Ethylen/Propylen/Dien-Terpolymerisate (EPDM) 1 bis 20 Doppelbindungen/1000 C-Atome aufweisen können. Als geeignete Dien-monomere in EPDM seien beispielsweise genannt: konjugierte Diene, z.B. Isopren und Butadien-1,3, und nichtkonjugierte Diene mit 5 bis 25 C-Atomen, z.B. 1,4-Pentadien, 1,4-Hexadien, 1,5-Hexadien, 2,5-Dimethyl-1,5-hexadienund 1,4-Octadien: cyclische Diene, z.B. Cyclopentadien, Cyclohexadien, Cycloocatadien und Dicyclopentadien; Alkyliden- und Alkenylnorbornene, z.B. 5-Ethyliden-norbornen, 2-Isopropenyl-5-norbornen und Tricyclodiene.

Bevorzugt sind die nichtkonjugierten Diene Hexandien-1,5, Ethyliden-norbornen oder Dicyclopentadien. Der Diengehalt in EPDM beträgt vorzugsweise 0,5 bis 10 Gew.-%, bezogen auf EPDM.

Derartige EPM- bzw. EPDM-Kautschuke sind z.B. in der DE-OS 2 808 709 beschrieben.

Bevorzugte Polymerisate Q sind auch selektiv hydrierte Blockcopolymerisate eines vinylaromatischen Monomeren und eines konjugierten Diens. Diese Blockcopolymerisate sind bekannt. Im allgemeinen kann für die Herstellung der geeigneten Blockcopolymerisate aus Styrol, $\alpha$-Methylstyrol, Vinyltoluol usw. und aus konjugierten Dienen, wie Butadien, Isopren usw., die für die Herstellung von Styrol-Dien-Blockcopolymerisaten verwendete Technologie benutzt werden, die in "Encyclopedia of Polymer Science and Technology", Bd. 15, Interscience, N.Y. (1971) auf den Seiten 508 ff. beschrieben ist. Die selektive Hydrierung kann auf an sich bekannte Weise durchgeführt werden, wobei die ethylenischen Doppelbindungen im wesentlichen vollständig hydriert werden, während die aromatischen Doppelbindungen im wesentlichen unbeeinflußt bleiben. Derartige selektiv hydrierte Blockcopolymerisate werden z.B. in der DE-OS 3 000 282 beschrieben.

Besonders bevorzugte Polymerisate Q sind Pfropfpolymerisate.

Bevorzugte Pfropfpolymerisate Q besitzen mittlere Teilchendurchmesser $d_{50}$ von 0,05 bis 1, vorzugsweise von 0,1 bis 0,8, insbesondere von 0,1 bis 0,5, $\mu$m.

Der mittlere Teilchendurchmesser $d_{50}$ ist der Durchmesser, oberhalb und unterhalb dessen jeweils 50 Gew.-% der Teilchen liegen. Er kann mittels UltrazentrifugenMessungen (W. Scholtan, H. Lange, Kolloid, Z. und Z. Polymere 250 (1972), 782-796) oder mittels Elektronenmikroskopie und anschließende Teilchenauszählung (G. Kämpf, H. Schuster, Angew. Makromolekulare Chemie 14, (1070), 111-129) bestimmt werden.

Bevorzugte Pfropfpolymerisate Q sind vernetzt und haben Gelgehalte von mindestens 50 Gew.-%, vorzugsweise mindestens 80 Gew.-% und insbesondere von mindestens 90 Gew.-%, bezogen auf Pfropfpolymerisat Q.

Der Gelgehalt vernetzter Dienkautschuke wird bei 25 °C in Toluol, der Gelgehalt vernetzter Acrylatkautschuke bei 25 °C in Dimethylformamid bestimmt (M. Hoffmann, H. Krömer, R. Kuhn, Polymeranalytik I un II, Georg Thieme Verlag, Stuttgart 1977).

Bevorzugte Pfropfpolymerisate Q sind Pfropfpolymerisate von 15 bis 60, vorzugsweise 20 bis 50, insbesondere 25 bis 40 Gew.-% wenigstens eines Vinyl- oder Vinylidenmonomeren aus der Reihe Styrol, $\alpha$-Methylstyrol, Acrylnitril, $C_1$-$C_8$-Alkylacrylat, $C_1$-$C_{18}$-Alkylmethacrylat, Hydroxy-$C_2$-$C_8$-alkyl(meth)acrylat, Epoxy-$C_2$-$C_8$-alkyl-(meth)acrylat auf 40 bis 85, vorzugsweise 50 bis 80, insbesondere 60 bis 75 Gew.-% teilchenförmigem vernetztem Dien- oder Acrylatkautschuk, jeweils bezogen auf Pfropfpolymerisat Q.

Bevorzugte Pfropfmonomere sind Methylmethacrylat sowie Mischungen aus Styrol und Methylmethacrylat und Mischungen aus Styrol und Acrylnitril.

Bevorzugte Dienkautschuke sind vernetzte Homo- und/oder Copolymerisate aus konjugierten $C_4$-$C_6$-Dienen. Bevorzugtes Dien ist Butadien-1,3. Die Diencopolymerisate können neben den Dienresten bis zu 30 Gew.-%, bezogen auf Diencopolymerisat, Reste anderer ethylenisch ungesättigter Monomerer, wie z.B. Styrol, Acrylnitril, Ester der Acryl- oder Methacrylsäure mit einwertigen $C_1$-$C_4$-Alkoholen, wie z.B. Methylacrylat, Ethylacrylat, Methylmethacrylat, Ethylmethacrylat, enthalten.

Die Herstellung der Dienkautschuk-Pfropfgrundlage und der daraus hergestellten Pfropfpolymerisate wird z.B. in "Methoden der Organischen Chemie" (Houben-Weyl), Bd. 14/1, Georg Thieme Verlag, Stuttgart 1961, S. 393-406, sowie in Ullmanns Encyclopädie der technischen Chemie, 4. Auflage, Bd. 19, Verlag Chemie, Weinheim, 1981, S. 279 bis 284, beschrieben.

Bevorzugte Pfropfgrundlagen auf Basis Acrylatkautschuk sind Polymerisate, die durch Polymerisation von $C_1$-$C_8$-Alkylacrylaten erhalten werden. Die Polymerisate können auch Copolymerisate der Acrylsäureester mit bis zu 40 Gew.-%, bezogen auf Copolymerisat, anderer Vinylmonomerer, wie Styrol, Acrylnitril, Methylmethacrylat, Vinylester, Vinylether, sein.

Bevorzugte Beispiele für vernetzende Monomere mit mehr als einer copolymerisierbaren Doppelbindung sind Ester ungesättigter $C_3$-$C_{12}$-Monocarbonsäuren und ungesättigter einwertiger $C_3$-$C_{12}$-Alkohole oder gesättigter $C_2$-$C_{20}$-Polyole mit 2 bis 4 OH-Gruppen, wie z.B. mehrfach ungesättigte heterocyclische

Verbindungen, wie Trivinylbenzole; aber auch Triallylphosphat.

Bevorzugte vernetzende Monomere sind Allylmethacrylat, Ethylenglykoldimethacrylat, Diallylphthalat und heterocyclische Verbindungen, die mindestens drei copolymerisierbare ethylenisch ungesättigte Doppelbindungen aufweisen.

Besonders bevorzugte vernetzende Monomere sind die cyclischen Monomeren Triallylcyanurat, Triallylisocyanurat, Trivinylcyanurat, Tris-acryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Kautschuk-Pfropfgrundlage.

Bei cyclischen vernetzenden Monomeren mit mindestens drei ethylenisch ungesättigten Doppelbindungen ist es vorteilhaft, nicht mehr als 1 Gew.-%, bezogen auf Kautschuk-Pfropfgrundlage, zu verwenden.

Acrylatkautschuke können auch mehrschalige Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern und anpolymerisiertes Acrylatmonomer als Schale enthalten.

Der Anteil des Polydien-Kerns in solchen mehrschaligen Kautschuken kann 0,1 bis 80, bevorzugt 10 bis 50 Gew.-% betragen. Schale(n) und Kern können unahängig voneinander teilvernetzt oder hochvernetzt sein.

Bevorzugte gepfropfte Acrylatkauschuke sind solche, die

a) mit cyclischen trifunktionellen Comonomeren wie Triallylcyanurat oder Triallylisocyanurat vernetzt sind (beschrieben in DE-OS 3 039 114);

b) einen Polybutadien-Kern enthalten (beschrieben in DE-OS 3 039 115);

c) hergestellt wurden "in Abwesenheit von Suspendiermittel" (beschrieben in DE-OS 3 117 051).

Bei der Herstellung der Pfropfpolymerisate Q durch Pfropfcopolymerisation, die üblicherweise in Gegenwart von Radikalstartern, z.B. wasserlöslichen Initiatoren, Emulgatoren oder Komplexbildnern/Pfropfaktivatoren sowie Reglern durchgeführt wird, bilden sich im allgemeinen neben dem eigentlichen Pfropfcopolymerisat in bestimmtem Ausmaß auch freie Polymerisate bzw. Copolymerisate der die Pfropfhülle bildenden Pfropfmonomeren.

Pfropfpolymerisate Q im Sinne der Erfindung sind deshalb durch Polymerisation von Pfropfmonomeren in Gegenwart des Kautschuklatex erhaltene Produkte, genau genommen also im allgemeinen ein Gemisch aus Pfropfcopolymerisat und freiem (Co)polymerisat der Pfropfmonomeren.

Die erfindungsgemäßen Mischungen weisen optimale Eigenschaften auf, wenn die Menge an freiem (Co)Polymerisat 15 Gew.-%, vorzugsweise 10 Gew.-%, insbesondere 7 Gew.-%, bezogen auf Komponente Q, nicht übersteigt. Der Staudinger-Index dieser freien (Co)polymerisate soll weniger als 0,6 dl/g, vorzugsweise weniger als 0,4 dl/g betragen, gemessen im Dimethylformamid bei 25 °C.

Bevorzugte gepfropfte Dienkautschuke sind z.B. in der DE-OS 2 348 377 und in den DE-OS 2 927 576, 3 025 605, bevorzugte gepfropfte Acrylatkautschuke z.B. in der DE-PS 2 444 584 und in den DE-OS 2 726 265, 3 039 114, 3 039 115, 3 117 052 beschrieben.

Bevorzugte als Stabilisatoren erfindungsgemäß zu verwendende Umsetzungsprodukte aus Perhydrobishpenol-A, Pentaerythrit und Phosphorigsäuerester bestehen weitgehend aus Verbindungen der Formel

1.):

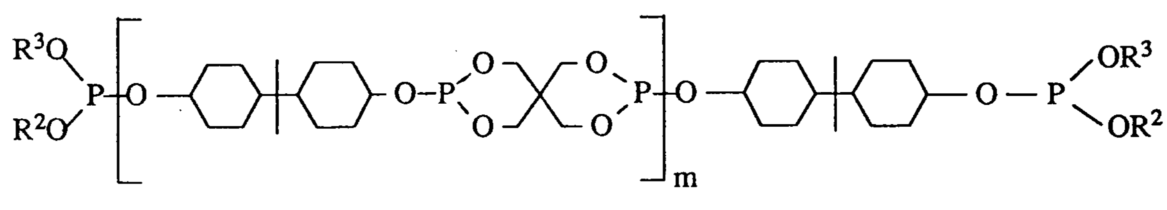

oder

2.):

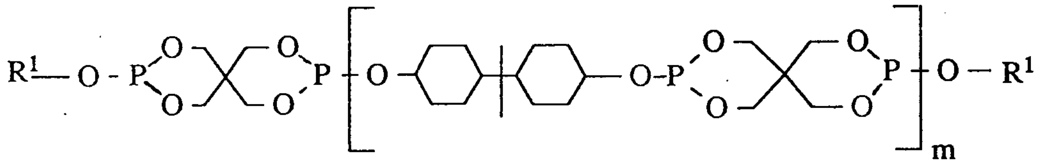

worin

$R^1$-$R^3$ unabhängig voneinander $C_1$-$C_{18}$-Alkyl, vorzugsweise Methyl, Ethyl, Stearyl, $C_6$-$C_{12}$-Aryl,

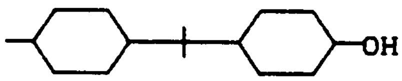

und

m eine ganze Zahl von 1 bis 20, vorzugsweise 2 bis 15, insbesondere 2 bis 10,

bedeuten,

Die als Stabilisatoren erfindungsgemäß zu verwendenden Umsetzungsprodukte können hergestellt werden, indem man Perhydrobisphenol-A, Pentaerythrit und Trialkyl- oder Triphenlphosphit (vorzugsweise Trimethyl- oder Triethylphosphit) und gegebenenfalls einwertigen $C_6$-$C_{18}$-Alkohol umestert und dabei das bei der Veresterung des Phosphorigsäureesters freiwerdende Alkanol bzw. Phenol, gegebenenfalls bei vermindertem Druck, vorzugsweise bis zu einer Sumpftemperatur von maximal 200 °C, aus dem Reaktionsgemisch entfernt.

Es hat sich bewährt, zunächst Pentaerythrit und Phosphorigsäureester unter Entfernung von etwa 2 Mol Hydroxylverbindung (erste Fraktion) pro Mol Phosphorigsäureester umzusetzen, dann Perhydrobisphenol-A zuzusetzen und weitere Hydroxylverbindung (zweite Fraktion), nämlich bis zu 1 Mol pro Mol Phosphorigsäureester, zu entfernen, bis die Sumpftemperatur vorzugsweise maximal 180 °C, insbesondere maximal 170 °C beträgt.

Will man als Substituenten $R^1$, $R^2$, $R^3$ $C_6$-$C_{18}$-Alkylreste haben und sind die entsprechenden Phosphorigsäureester nicht oder nur teurer erhältlich, kommt eine abschließende Veresterung mit dem gegebenenfalls mitzuverwendenden $C_6$-$C_{18}$-Monoalkohol in Frage. Besonders geeignet sind primäre Alkohole. Bevorzugte Beispiele geeigneter $C_6$-$C_{18}$-Monoalkohole sind Isooctanol, Decanol, Dodecanol, Tetradecanol und Octadecanol.

Soll $C_6$-$C_{18}$-Monoalkohol mitverwendet werden, so wird dieser vorzugsweise zugegeben, nachdem die zweite Fraktion Hydroxylverbindung aus dem Reaktionsgemisch entfernt ist. Man entfernt dann eine dritte Fraktion Hydroxylverbindung gegebenenfalls unter vermindertem Druck, bis zur oben angegebenen maximalen Sumpftemperatur.

Arbeiten unter vermindertem Druck wird besonders dann erforderlich, wenn die letzten Reste Hydroxylverbindung aus dem Reaktionsgemisch entfernt werden sollen oder wenn als Phosphorigsäureester Triphenylphosphit eingesetzt wird.

Geeignete phenolische Antioxidantien sind in Ullmanns Encyclopädie der technischen Chemie, 4. Aufl., Bd. 8, 25-31, beschrieben.

Bevorzugte phenolische Antioxidantien entsprechen der Formel

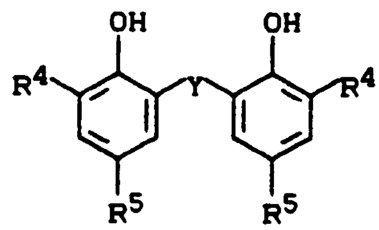 (II)

worin
Y

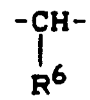

mit $R^6$ = H, $C_1$-$C_6$-Alkyl, oder -S-, vorzugsweise $-CH_2-$,
$R^4$ $C_1$-$C_9$-Alkyl, $C_5$-$C_6$-Cycloalkyl, vorzugsweise Cyclohexyl,
$R^5$ $C_1$-$C_4$-Alkyl, vorzugsweise Methyl,
bedeuten.

Bevorzugte phenolische Antioxidantien sind auch Verbindungen der Formel

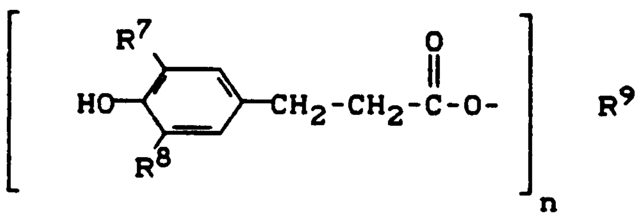 (III)

worin
$R^7$ $C_4$-$C_8$-tert.-Alkyl, vorzugsweise tert.-Butyl,
$R^8$ $C_1$-$C_8$-Alkyl, vorzugsweise Methyl oder tert. Butyl,
$R^9$ $C_8$-$C_{18}$-Alkyl oder $C_2$-$C_{12}$-Alkylen und
n 1 oder 2
bedeuten.

Diese Verbindungen III und Verfahren zu ihrer Herstellung sind aus DE-AS 1 201 349, DE-OS 1 543 644 und DE-OS 21 503 327 bekannt.

Die erfindungsgemäßen Mischungen können neben den obligatorischen Stabilisatoren und phenolischen Antioxidantien übliche Zusätze, wie z.B. Entformungshilfsmittel, Mittel zur Verbesserung der Oberflächengleiteigenschaften, Fließhilfsmittel, Kristallisations-hilfsmittel, Antistatika, UV-Stabilisatoren, Stabilisatoren gegen hydrolytischen Abbau, anorganische und/oder organische Farbpigmente bzw. Farbstoffe und übliche Flammschutzmittel enthalten.

Die Herstellung der erfindungsgemäßen Mischungen kann in üblichen Mischaggregaten, wie Walzen, Knetern, Ein-und Mehrwellenextrudern erfolgen.

Die Stabilisatoren können den Komponenten P und/oder Q bei deren Herstellung, nach ihrer Herstellung (z.B. durch Auftrudeln auf das Granulat) oder beim Mischen der Komponenten P und Q, zweckmäßigerweise in Form eines Konzentrats (Pulver oder Granulat) in Polyester P und/oder Polymerisat Q, zugesetzt werden.

Weiterer Gegenstand der Erfindung ist also ein Verfahren zur Herstellung stabilisierter Mischungen aus Polyalkylenterephthalat und kautschukelastischem Polymerisat durch Zusammenschmelzen der Komponenten bei Temperaturen, die vorzugsweise mindestens 20 °C und höchstens 70 °C über dem Schmelzpunkt

des Polyesters P liegen.

Das Herstellverfahren kann diskontinuierlich oder kontinuierlich unter Bedingungen durchgeführt werden, bei denen eine Oxidation weitgehend ausgeschlossen ist, d.h. unter inertem Schutzgas, wie z.B. Stickstoff, Kohlendioxid oder Argon, und/oder unter vermindertem Druck.

Die erfindungsgemäßen Mischungen können einer thermischen Nachbehandlung in der festen Phase bei Temperaturen oberhalb 100 ° C, vorzugsweise oberhalb 180 ° C, unterzogen werden.

Die erfindungsgemäßen Mischungen können zur Herstellung von Formkörpern, die für hohe Stoßbelastungen geeignet sind, wie z.B. Stoßfänger, Spoiler, Rammleisten im Kfz-Bereich, dienen.

Die Bedingungen für die Verarbeitung der erfindungsgemäßen Mischungen sollten so gewählt werden, daß die Massetemperatur der Schmelze mindestens 20 ° C, höchstens 50 ° C, oberhalb des Schmelzpunktes des Polyesters liegt. Die Verweilzeit der Schmelze in der Apparatur sollte unter den angegebenen Temperaturbedingungen nicht länger als 9 Minuten, vorzugsweise nicht länger als 6 Minuten, sein.

Die erfindungsgemäßen Mischungen zeigen unter thermischer Belastung einen stark verminderten Molekulargewichtsabbau, erkennbar an der geringen Viskositätsminderung und an der geringen Zunahme des Gehalts an Carboxyl-Endgruppen. Dies bedeutet aber auch ein weitgehendes Erhalten der herorragenden mechanischen Eigenschaften, wie z.B. Dehnfähigkeit und Tieftemperatur-Bruchverhalten.

## Beispiele

### I. Verwendete Komponenten

Stabilisator A
(Vergleich)

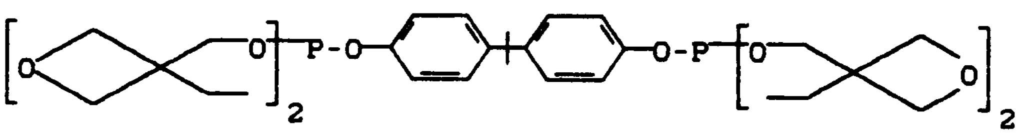

entsprechend DE-OS 2 615 341

Stabilisator B
(Vergleich)

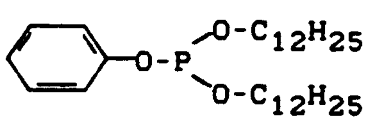

entsprechend Ullmann, 4. Aufl., Bd. 8, S. 40, unten.

Stabilisator C
(erfindungsgemäß)

Umsetzungsprodukt aus 1 Mol Pentaerythrit, 2 Mol Triethylphosphit und 1,1 Mol Perhydrobisphenol-A.

Stabilisator D
(Vergleich)

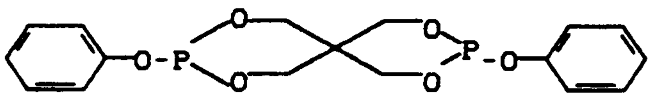

Stabilisator E

Kombination üblicher Stabilisatoren:

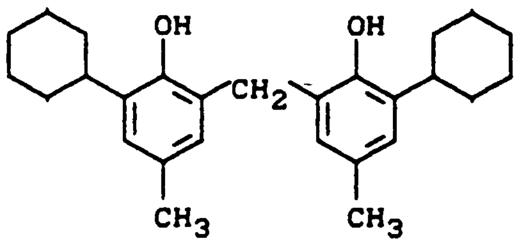

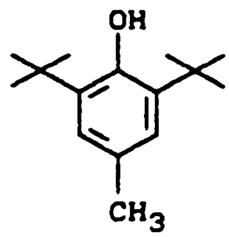

0,2 Gew.-Teile 0,8 Gew.-Teile

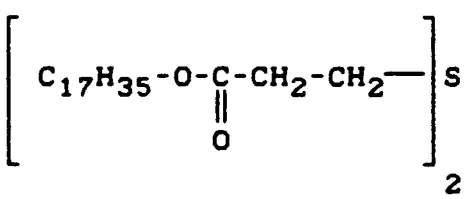

0,8 Gew.-%

Stabilisator F
(erfindungsgemäß

Umsetzungsprodukt aus 1 Mol Pentaerythrit, 2 Mol Triethylphosphit, 1 Mol Perhydrobisphenol-A und 0,05 Mol Stearylalkohol.

Stabilisator G
(erfindungsgemäß)

Umsetzungsprodukt aus 1 Mol Pentaerythrit, 2 Mol Triethylphosphit und 1,2 Mol Perhydrobisphenol-A.

PBT

Polybutylenterephthalat mit einer Intrinsic-Viskosität von 1,20 dl/g, gemessen in Phenol/o-Dichlorbenzol (Gewichtsverhältnis 1:1) bei 25 °C im Ubbelohde-Viskosimeter (Polyester P).

Polymerisat

Pfropfpolymerisat mit einem mittleren Teilchendurchmesser $d_{50}$ von 0,4 µm aus 75 Gew.-% Polybutadien-Pfropfgrundlage (Gelgehalt 85 Gew.-%) und 25 Gew.-% Pfropfauflage aus 72 Gew.-Tl. Styrol

und 28 Gew.-Tl. Acrylnitril (Polymerisat Q), enthaltend 1,8 Gew.-% Stabilisator E.

II. Herstellung der Komponenten und Formmassen

1. Stabilisator C

36,6 g (0,27 Mol) Pentaerythrit und 89,6 g (0,54 Mol) Triethylphosphit wurden miteinander umgesetzt, wobei unter Normaldruck bis zu einer Sumpftemperatur von 170 °C 44 g Ethanol über eine Kolonne abdestillierten. Dann gab man 72 g (0,3 Mol) Perhydrobisphenol A hinzu und destillierte bis zu einer Sumpftemperatur von 170 °C weitere 20 g Ethanol ab. Man erhielt 130 g eines farblosen spröden Harzes.

2. Stabilisator D

272 g (2 Mol) Pentaerythrit und 1240 g (4 Mol) Triphenylphoshit wurden unter Abdestillieren von Phenol bis zu einer Sumpftemperatur von 190 °C bei einem Druck von ca. 20 mbar miteinander umgesetzt. Man erhielt 740 g Phenol als Destillat und 770 g eines kristallisierenden Rückstandes.

3. Stabilisator F

27,7 g (0,2 Mol) Pentaerythrit und 66,4 g (0,4 Mol) Triethylphosphit wurden, wie vorstehend beschrieben, umgesetzt, wobei 31 g Ethanol abgespalten wurden. Nach Zugabe von 48 g (0,2 Mol) Perhydrobisphenol A wurden weitere 20 g und nach Zugabe von 2,78 g (0,01 Mol) Stearylalkohol noch 3 g Ethanol überdestilliert. Man erhielt 91 g eines farblosen Harzes.

4. Stabilisator G

wurde analog Stabilisator C hergestellt aus
0,25 Mol Pentaerythrit,
0,50 Mol Triethylphosphit und
0,30 Mol Perhydrobisphenol-A

Herstellung thermoplastischer Formmassen

Die Komponenten, die in Form von Granulat (PBT), als Pulver (Polymerisat Q), als Pulvermischung in gemahlenem PBT (Stabilisatoren und Antioxidantien) bzw. in Granulatform als Konzentrat in PBT (Entformungsmittel) vorlagen, wurden auf einem Zweiwellenextruder in der Schmelze gemischt und extrudiert (Massetemperatur: 270-280 °C, Durchsatz: 8 kg/Stunde, Schneckendrehzahl: 100 U/Minute). Der Schmelzstrang wurde in Wasser gekühlt, trocken geblasen, granuliert und bei erhöhter Temperatur getrocknet. Das getrocknete Granulat wurde auf einer üblichen Spritzgußmaschine bei Massetemperaturen von 250-270 °C, Formtemperaturen von 80 °C und einer Verweilzeit im Schneckenzylinder von 6 bis 9 Minuten zu Norm-Prüfstäben verspritzt.

Beispiel 1 Stabilisierung von PBT (Vergleich)

Die Komponenten wurden in den aus der Tabelle zu entnehmenden Mengen (Gew.-%) eingesetzt. Die erhaltenen Granulate wurden bei 180 °C an der Luft gealtert. Ihre Lösungsviskosität wurden in verschiedenen zeitlichen Abständen gemessen.

| | a | b | c | d | e |
|---|---|---|---|---|---|
| PBT | 99,6 | 99,4 | 99,4 | 99,4 | 99,4 |
| Formtrennmittel | 0,4 | 0,4 | 0,4 | 0,4 | 0,4 |
| Stabilisator Typ | - | A | B | C | D |
| Menge | - | 0,2 | 0,2 | 0,2 | 0,2 |
| Viskosität $\eta_{rel}$* nach | | | | | |
| 0 Tagen Alterung | 1,520 | 1,574 | 1,531 | 1,572 | 1,592 |
| 6 Tagen Alterung | 1,458 | 1,591 | 1,441 | 1,568 | 1,461 |
| 10 Tagen Alterung | 1,393 | 1,613 | - | 1,533 | - |
| 21 Tagen Alterung | 1,291 | 1,557 | - | 1,442 | - |

* gemessen als 0,65 gew.-%ige Lösung in Phenol/o-Dichlorbenzol (1/1 Gewichtsteile) bei 25°C

Der Vergleich zeigt, daß die Stabilisatoren B und D ungeeignet sind und daß der Stabilisator A des Standes der Technik den erfindungsgemäß zu verwendenden Stabilisator C bei der Stabilisierung von kautschukfreiem PBT deutlich übertrifft.

Beispiel 2: Stabilisierung von PBT/Kautschuk-Mischungen

Die Komponenten wurden in den aus der Tabelle zu entnehmenden Mengen [Gew.-%] eingesetzt. Aus den Viskositäten und der Kerbschlagzähigkeit der durch Extrusion bei 250 bzw. 270 °C hergestellten Granulate ergibt sich die bessere Eignung von Stabilisator C gegenüber Stabilisator A, obwohl in kautschukfreiem PBT Stabilisator A sehr gut wirksam ist. Die Vergleichsstabilisatoren B und F fallen sowohl in kautschukfreiem PBT als auch in der PBT/Kautschuk-Mischung gegenüber den Stabilisatoren A und C erheblich ab.

| | a (Vergleich) | b (Vergleich) | c | d (Vergleich) | e (Vergleich) |
|---|---|---|---|---|---|
| PBT | 76,7 | 76,4 | 76,4 | 76,4 | 76,4 |
| Polymerisat Q+ | 23,0 | 23,0 | 23,0 | 23,0 | 23,0 |
| Formtrennmittel | 0,3 | 0,3 | 0,3 | 0,3 | 0,3 |
| Stabilisator Typ | - | A | C | B | D |
| Menge | - | 0,3 | 0,3 | 0,3 | 0,3 |
| Viskosität $\eta_{rel}$* vor Verarbeitung: | 1,546 | 1,650 | 1,652 | 1,648 | 1,633 |
| nach Verarbeitung: | | | | | |
| bei 250° C: | 1,478 | 1,661 | 1,619 | - | - |
| bei 270° C: | 1,395 | 1,546 | 1,623 | - | - |
| Kerbschlagzähigkeit (Charpy) | | | | | |
| $a_K$ (kJ/m²) bei: | | | | | |
| 0° C (250° C) | 18 | 38 | 39 | 33 | 32 |
| (270° C) | 10 | 35 | 39 | 18 | 19 |
| -15° C (250° C) | 12 | 28 | 26 | - | - |
| (270° C) | 8 | 17 | 22 | - | - |
| -20° C (250° C) | 11 | 19 | 23 | 17 | 18 |
| (270° C) | 8 | 16 | 18 | 16 | 15 |
| Reißdehnung $E_R$ (%) (250° C) | 68 | 72 | 118 | - | - |
| (270° C) | 35 | 87 | 78 | - | - |

\+ enthält 1,8 Gew.-% Antioxidantien (vgl. Legende zu Polymerisat Q)

Beispiel 3: Stabilisierung von PBT/Kautschuk-Mischungen

Man ging analog Beispiel 2 vor, wobei der Stabilisator A (Vergleich) mit den erfindungsgemäßen Stabilisatoren C, F und G verglichen wurde.

| | a | b | c | d | e |
|---|---|---|---|---|---|
| PBT | 76,4 | 76,4 | 76,4 | 76,4 | 76,4 |
| Polymerisat Q+ | 23,0 | 23,0 | 23,0 | 23,0 | 23,0 |
| Formtrennmittel | 0,3 | 0,3 | 0,3 | 0,3 | 0,3 |
| Stabilisator Typ | - | A | C | F | G |
| Menge | - | 0,3 | 0,3 | 0,3 | 0,3 |
| Viskosität $\eta_{rel}$* | | | | | |
| vor Verarbeitung: | 1,569 | 1,597 | 1,558 | 1,567 | 1,610 |
| nach Verarbeitung: | | | | | |
| bei 250°C: | 1,590 | 1,631 | 1,645 | 1,664 | 1,616 |
| bei 270°C: | 1,456 | 1,541 | 1,556 | 1,572 | 1,617 |
| Kerbschlagzähigkeit (Charpy) | | | | | |
| $a_K$ (kJ(m$^2$) -10°C | | | | | |
| (250°C) | 36 | 38 | 38 | 42 | 40 |
| (270°C) | 14 | 18 | 20 | 21 | 32 |
| Reißdehnung $E_Q$ [%] | | | | | |
| (250°C) | 36 | 42 | 157 | 129 | 130 |
| (270°C) | 26 | 33 | 54 | 63 | 83 |

+ enthält 1,8 Gew.-% Antioxydantien (vgl. Legende zu Polymerisat Q)

**Patentansprüche**

**1.** Mischungen aus
65 bis 99 Gew.-% Polyalkylenterephthalat P,welches ein Reaktionsprodukt aus aromatischen Dicarbonsäuren oder ihren reaktionsfähigen Derivaten und aliphatischen, cycloaliphatischen oder araliphatischen Diolen und Mischungen dieser Reaktionsprodukte ist, und
35 bis 1 Gew.-% kautschukelastischem Polymerisat Q mit einer Glasübergangstemperatur unter -30 °C, wobei sich die Prozentangaben auf die Summe P + Q beziehen,
dadurch gekennzeichnet, daß die Mischungen 0,01 bis 3 Gew.-%, bezogen auf die Summe P + Q, monomeres und/oder oligomeres Umsetzungsprodukt aus
Perhydrobisphenol-A und -
jeweils pro Mol Perhydrobisphenol-A -
0,5 bis 2,0 Mol Pentaerythrit,
1,3 bis 4 Mol Phosphorigsäure-$C_1$-$C_4$-alkyl- oder -phenylester und gegebenenfalls
bis 1,5 Mol aliphatischem einwertigem $C_6$-$C_{18}$-Alkhol und,
bezogen auf die Summe P + Q, 0,01 bis 3 Gew.-% phenolisches Antioxydans und 0,1 bis 3 Gew.-% Thioether der Formel

$$(R^{10}-O-\overset{\overset{O}{\|}}{C}-CH_2-CH_2-)_2S \qquad (IV)$$

worin
$R^{10}$ $C_8$-$C_{18}$-Alkyl bedeutet,
enthalten.

**2.** Mischungen nach Anspruch 1, dadurch gekennzeichnet, daß sie
75 bis 90 Gew.-% Polyalkylenterephthalat P und
25 bis 10 Gew.-% Polymerisat Q enthalten.

**3.** Mischungen nach Ansprüchen 1 und 2, dadurch gekennzeichnet, daß sie 0,1 bis 2 Gew.-% des monomeren und/oder oligomeren Umsetzungsprodukts enthalten,

**4.** Mischungen nach Ansprüchen 1-3, dadurch gekennzeichnet, daß das Umsetzungsprodukt ein solches aus Perhydrobisphenol-A und - jeweils pro Mol Perhydrobisphenol-A - 0,66 bis 1,5 Mol Pentaerythrit, 1,5 bis 3,5 Mol Phosphorigsäure-$C_1$-$C_4$-alkyl- oder -phenylester und gegebenenfalls bis 1 Mol aliphatischem einwertigem $C_6$-$C_{18}$-Alkohol ist.

**5.** Mischungen nach Ansprüchen 1-4, dadurch gekennzeichnet, daß das Umsetzungsprodukt ein solches aus Perhydrobisphenol-A und - jeweils pro Mol Perhydrobisphenol-A - 0,75 bis 1,3 Mol Pentaerythrit, 1,6 bis 3,2 Mol Phosphorigsäure-$C_1$-$C_4$-alkyl- oder -phenylester und gegebenenfalls bis 0,5 Mol aliphatischem einwertigem $C_6$-$C_{18}$-Alkohol ist.

**6.** Mischungen nach Ansprüchen 1-5, dadurch gekennzeichnet, daS das Umsetzungsprodukt ein solches aus Perhydrobisphenol-A und - jeweils pro Mol Perhydrobisphenol-A - 0,8 bis 1,2 Mol Pentaerythrit, 1,7 bis 2,8 Mol Phosphorigsäure - $C_1$-$C_4$-alkyl- oder -phenylester und gegebenenfalls bis zu 0,3 Mol aliphatischem einwertigem $C_6$-$C_{18}$-Alkohol ist.

**7.** Mischungen nach Ansprüchen 1-6, dadurch gekennzeichnet, daß sie 0,1 bis 2,5 Gew.-% phenolisches Antioxidans enthalten.

**8.** Mischungen nach Ansprüchen 1-7, dadurch gekennzeichnet, daß sie als phenolisches Antioxydans die Verbindungen

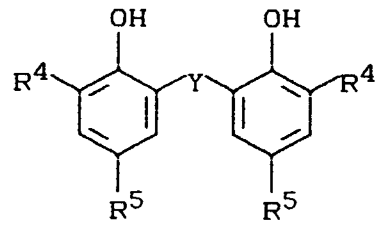

(II)

und/oder

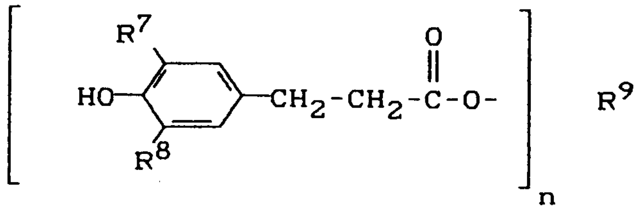

(III)

enthalten, worin

Y

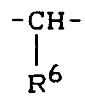

mit $R^6$ = H, $C_1$-$C_6$-Alkyl,
oder -S-,

$R^4$ $C_1$-$C_9$-Alkyl, $C_5$-$C_6$-Cycloalkyl,

$R^5$ $C_1$-$C_4$-Alkyl,

$R^7$ $C_4$-$C_8$-tert.-Alkyl,

$R^8$ $C_1$-$C_8$-Alkyl,

$R^9$ $C_8$-$C_{18}$-Alkyl oder $C_2$-$C_{12}$-Alkylen und

n 1 oder 2

bedeuten.

**9.** Verfahren zur Herstellung der Mischungen nach Ansprüchen 1-8 durch Zusammenschmelzen der Komponenten.

**10.** Verwendung der Mischungen nach Ansprüchen 1-8 zur Herstellung von Formkörpern,

## Claims

**1.** Mixtures of
65 to 99% by weight polyalkylene terephthalate P which is a reaction product of aromatic dicarboxylic acids or reactive derivatives thereof and aliphatic, cycloaliphatic or araliphatic diols and mixtures of these reaction products and
35 to 1% by weight elastomeric polymer Q having a glass transition temperature below -30 °C,
the percentages being based on the sum of P + Q,
characterized in that the mixtures contain from 0.01 to 3% by weight, based on the sum of P + Q, of monomeric and/or oligomeric reaction product of
perhydrobisphenol A and -
per mol perhydrobisphenol A -
0.5 to 2.0 mol pentaerythritol,
1.3 to 4 mol phosphorous acid $C_{1-4}$ alkyl or phenyl ester and, optionally,

up to 1.5 mol aliphatic monohydric $C_{6-18}$ alcohol and,
based on the sum of P + Q,
0.01 to 3% by weight phenolic antioxidant and 0.1 to 3% by weight thioether corresponding to the formula

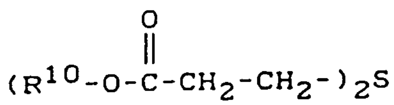

(IV)

in which
$R^{10}$ is $C_{8-18}$ alkyl.

**2.** Mixtures as claimed in claim 1, characterized in that they contain
75 to 90% by weight polyalkylene terephthalate P and
25 to 10% by weight polymer Q.

**3.** Mixtures as claimed in claims 1 and 2, characterized in that they contain 0.1 to 2% by weight of the monomeric and/or oligomeric reaction product.

**4.** Mixtures as claimed in claims 1 to 3, characterized in that the reaction product is one of perhydrobisphenol A and - per mol perhydrobisphenol A - 0.66 to 1.5 mol pentaerythritol, 1.5 to 3.5 mol phosphorous acid $C_{1-4}$ alkyl or pheny ester and, optionally, up to 1 mol aliphatic monohydric $C_{5-18}$ alcohol.

**5.** Mixtures as claimed in claims 1 to 4, characterized in that the reaction product is one of perhydrobisphenol A and - per mol perhydrobisphenol A - 0.75 to 1.3 mol pentaerythritol, 1.6 to 3.2 mol phosphorous acid $C_{1-4}$, alkyl or phenyl ester and, optionally, up to 0.5 mol aliphatic monohydric $C_{5-18}$ alcohol.

**6.** Mixtures as claimed in claims 1 to 5, characterized in that the reaction product is one of perhydrobisphenol A and - per mol perhydrobisphenol A - 0.8 to 1.2 mol pentaerythritol, 1.7 to 2.8 mol phosphorous acid $C_{1-4}$ alkyl or phenyl ester and, optionally, up to 0.3 mol aliphatic monohydric $C_{6-18}$ alcohol.

**7.** Mixtures as claimed in claims 1 to 6, characterized in that they contain from 0.1 to 2.5% by weight phenolic antioxidant.

**8.** Mixtures as claimed in claims 1 to 7, characterized in that they contain the compounds

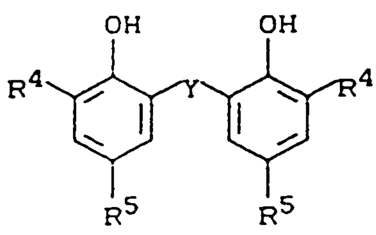

(II)

and/or

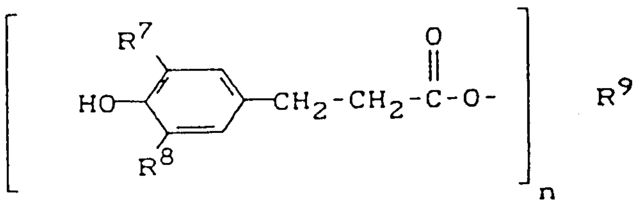 (III)

in which
Y represents

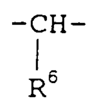

with $R^6$ = H, $C_{1-16}$ alkyl or -S-,
$R^4$ represents $C_{1-9}$ alkyl, $C_{5-6}$ cycloalkyl,
$R^5$ represents $C_{1-4}$ alkyl,
$R^7$ represents $C_{4-8}$ tert. alkyl,
$R^8$ represents $C_{1-8}$ alkyl,
$R^9$ represents $C_{8-18}$ alkyl or $C_{2-12}$ alkylene and
n = 1 or 2,
as phenolic antioxidant.

**9.** A process for the production of the mixtures claimed in claims 1 to 8 by melting of the components together.

**10.** The use of the mixtures claimed in claims 1 to 9 for the production of moulded articles.

**Revendications**

**1.** Mélanges constitués
de 65 à 99% en poids de polyalkylènetéréphtalate P, qui est un produit de réaction d'acides dicarboxyliques aromatiques ou de leurs dérivés réactifs et de diols aliphatiques, cycloaliphatiques ou araliphatiques et de mélanges de ces produits réactionnels, et
de 35 à 1% en poids de polymérisat Q ayant l'élasticité du caoutchouc, présentant une température de transition vitreuse inférieure à -30 ° C, les indications de pourcentage se rapportant à la somme P + Q, caractérisés en ce qu'ils contiennent 0,01 à 3% en poids, par rapport à la somme P + Q, de produit réactionnel monomère et/ou oligomère
de perhydrobisphénol A et
pour chaque mole de perhydrobisphénol A-
0,5 à 2,0 mole de pentaérythritol,
1,3 à 4 moles d'ester d'alkyle en $C_1$ à $C_4$ ou de phényle d'acide phosphoreux et, le cas échéant
jusqu'à 1,5 mole d'alcool en $C_6$ à $C_{18}$ aliphatique monovalent et
par rapport à la somme P + Q, 0,01 à 3% en poids d'antioxydant phénolique et 0,1 à 3% en poids de thioéther de formule

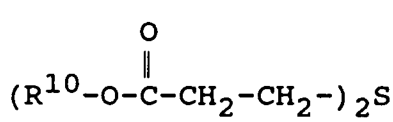 (IV)

dans laquelle

$R^{10}$ est un groupe alkyle en $C_8$ à $C_{18}$.

**2.** Mélanges suivant la revendication 1, caractérisés en ce qu'ils contiennent
75 à 90% en poids de polyalkylènetéréphtalate P et
25 à 10% en poids de polymérisat Q.

**3.** Mélanges suivant les revendications 1 et 2, caractérisés en ce qu'ils contiennent 0,1 à 2% en poids du produit de réaction monomère et/ou oligomère.

**4.** Mélanges suivant les revendications 1 à 3, caractérisés en ce que le produit de réaction est un produit dérivé de perhydrobisphénol A et - pour chaque mole de perhydrobisphénol A - de 0,66 à 1,5 mole de pentaérythritol, de 1,5 à 3,5 moles d'ester alkylique en $C_1$ à $C_4$ ou d'ester phénylique d'acide phosphoreux et, le cas échéant, jusqu'à une mole d'alcool aliphatique monovalent en $C_6$ à $C_{18}$.

**5.** Mélanges suivant les revendications 1 à 4, caractérisés en ce que le produit de réaction est un produit dérivé de perhydrobisphénol A et - pour chaque mole de perhydrobisphénol A - de 0,75 à 1,3 mode de pentaérythritol, 1,6 à 3,2 moles d'ester alkylique en $C_1$ à $C_4$ ou d'ester phénylique d'acide phosphoreux et, le cas échéant, jusqu'à 0,5 mole d'alcool aliphatique monovalent en $C_6$ à $C_{18}$.

**6.** Mélanges suivant les revendications 1 à 5, caractérisés en ce que le produit de réaction est un produit dérivé du perhydrobisphénol A et - pour chaque mole de perhydrobisphénol A - de 0,8 à 1,2 mole de pentaérythritol, 1,7 à 2,8 moles d'ester d'alkyle en $C_1$ à $C_4$ ou de phényle d'acide phosphoreux et le cas échéant jusqu'à 0,3 mole d'alcool aliphatique monovalent en $C_6$ à $C_{18}$.

**7.** Mélanges suivant les revendications 1 à 6, caractérisés en ce qu'ils contiennent 0,1 à 2,5% en poids d'antioxydant phénolique.

**8.** Mélanges suivant les revendications 1 à 7, caractérisés en ce qu'ils contiennent comme antioxydant phénolique les composés

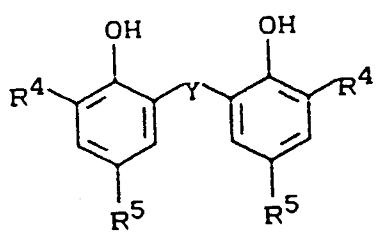

(II)

et/ou

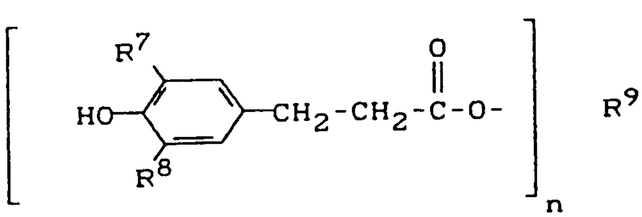

(III)

dans lesquels,

Y est un groupe

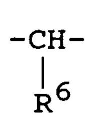

dans lequel $R^6$ représente H, un radical alkyle en $C_1$ à $C_6$ ou -S-,

$R^4$ est un radical alkyle en $C_1$ à $C_9$, cycloalkyle en $C_5$ ou $C_6$,

$R^5$ est un radical alkyle en $C_1$ à $C_4$,

$R^7$ est un radical tertioalkyle en $C_4$ à $C_8$,

$R^8$ est un radical alkyle en $C_1$ à $C_8$,

$R^9$ est un radical alkyle en $C_8$ à $C_{18}$ ou alkylène en $C_2$ à $C_{12}$ et

n a la valeur 1 ou 2.

**9.** Procédé de production des mélanges suivant les revendications 1 à 8 par fusion conjointe des composants.

**10.** Utilisation des mélanges suivant les revendications 1 à 8 pour la production de pièces moulées.